(19) **Europäisches Patentamt**
**European Patent Office**
**Office européen des brevets**

(11) **EP 2 125 941 B1**

(12) **EUROPEAN PATENT SPECIFICATION**

(45) Date of publication and mention
of the grant of the patent:
**01.05.2013 Bulletin 2013/18**

(51) Int Cl.:
***C08J 7/04*** *(2006.01)*          ***B32B 27/00*** *(2006.01)*

(21) Application number: **08717020.5**

(22) Date of filing: **21.02.2008**

(86) International application number:
**PCT/EP2008/052152**

(87) International publication number:
**WO 2008/104502 (04.09.2008 Gazette 2008/36)**

(54) **A LAYERED STRUCTURE COMPRISING NANOPARTICLES**

SCHICHTSTRUKTUR MIT NANOTEILCHEN

STRUCTURE STRATIFIÉE COMPRENANT DES NANOPARTICULES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.02.2007 EP 07103056**

(43) Date of publication of application:
**02.12.2009 Bulletin 2009/49**

(73) Proprietor: **Saint-Gobain Performance Plastics Chaineux S.A.**
**4650 Chaineux (BE)**

(72) Inventors:
• **DE MEYER, Christy**
  **B-8790 Waregem (BE)**
• **LAPSHIN, Sergey**
  **B-9000 Gent (BE)**
• **MOERKERKE, Robrecht**
  **B-8500 Kortrijk (BE)**
• **PERSOONE, Peter**
  **B-9800 Deinze (BE)**
• **VANEECKE, Jan**
  **B-8830 Gits (BE)**

(74) Representative: **Zimmermann & Partner**
**Postfach 330 920**
**80069 München (DE)**

(56) References cited:
**EP-A1- 1 452 309      EP-A1- 1 612 238**
**EP-A2- 0 959 097**

**Description**

Technical Field

The invention relates to a layered structure comprising at least a first and a second layer whereby the refractive indices of the first and the second layer are matched to avoid iridescence. The invention also relates to a window film comprising a substrate and a low iridescent coating. The invention further relates to a method to match the index of refractive indices of two layers thereby avoiding iridescence.

Background Art

Window films such as solar control films and safety films are known in the art. These window films comprise a polymer substrate provided with one or more layers for example to absorb or reflect infrared radiation.

However, a problem associated with this type of films having low thickness is the occurrence of iridescence. Iridescence is known as an optical phenomenon showing interference colors in reflected light and to a lesser extend in transmitted light. The iridescence phenomenon is most pronounced using artificial light and more particular using fluorescent light.

Disclosure of Invention

It is an object of the present invention to provide a layered structure comprising at least a first and a second layer whereby the refractive indices of the first and the second layer are matched.

It is another object to provide a layered structure avoiding the occurrence of iridescence.

It is a further object of the present invention to provide a window film comprising a substrate and coating avoiding the occurrence of iridescence.

It is still a further object of the present invention to provide a method to match the index of refractive indices of two layers thereby avoiding the occurrence of iridescence.

According to a first aspect of the present invention a layered structure comprising at least a first layer having a refractive index $\eta_1$ and a second layer having a refractive index $\eta_2$ whereby the refractive indices of the first layer $\eta_1$ and the refractive index of the second layer $\eta_2$ are matched is provided.

The first layer comprises a first matrix material having a refractive index $\eta_{matrix\ 1}$ and the second layer comprises a second matrix material having a refractive index $\eta_{matrix\ 2}$. The refractive index of the first matrix material $\eta_{matrix\ 1}$ is different from the refractive index of the second matrix material $\eta_{matrix\ 2}$. The difference between the refractive index of the first matrix material $\eta_{matrix\ 1}$ and the refractive index of the second matrix material $\eta_{matrix\ 2}$ at a wavelength of 510 nm being at least 0.1.

The layered structure is characterised in that at least one of the first layer or the second layer comprises nanoparticles to match the difference in refractive index between the first matrix material $\eta_{matrix}$ and the second matrix material $\eta_{matrix\ 2}$ in such a way that the difference between the refractive index of the first layer $\eta_1$ and the refractive index of the second layer $\eta_2$ at each wavelength of the visible range is less than 0.08. For the purpose of this invention, the visible range is defined as the range between 380 and 750 nm.

In a preferred embodiment the difference between the refractive index of the first matrix material $\eta_{matrix\ 1}$ and the refractive index of the second matrix material $\eta_{matrix\ 2}$ at a wavelength of 510 nm is higher than 0.12, for example higher than 0.15.

As mentioned above the difference in refractive index of the first layer $\eta_1$ and the refractive index of the second layer $\eta_2$ at each wavelength in the visible range is lower than 0.8. More preferably, the difference in refractive index of the first layer $\eta_1$ and the refractive index of the second layer $n_2$ at each wavelength in the visible range is lower than 0.6 and most preferably lower than 0.05 or even lower than 0.02.

By using nanoparticles to match the refractive index of the first layer and the second layer, the optical properties of the layered structure such as clarity and haze are not influenced or are only influenced to a very low extent.

In a first embodiment either the first layer or the second layer comprises nanoparticles. In an alternative embodiment both the first and the second layer comprises nanoparticles.

For the purpose of this invention nanoparticles are defined as particles having a diameter ranging between 1 and 500 nm. More preferably, the diameter of the particles range between 10 and 100 nm, for example between 20 and 80 nm.

The nanoparticles may have any shape. They can for example have a spherical, elongated, cubic, ellipsoidal or any other regular or irregular shape. The nanoparticles can be amorphous, semi-amorphous or crystalline.

The nanoparticles may comprise either organic or inorganic nanoparticles. Example of organic nanoparticles are carbon nanotubes or nanospheres. Examples of inorganic particles are oxide particles, sulphide particles and nitride particles.

The oxide particles are preferably selected from the group consisting of aluminum oxide, silicon oxide, zirconium oxide, titanium oxide, antimony oxide, zinc oxide, tin oxide, indium oxide, indium tin oxide, cerium oxide, niobium oxide, vanadium oxide, tungsten oxide, tantalium oxide, doped oxides and mixtures of one or more of these oxides. Doped oxides comprise for example doped indium oxide such as indium oxide doped with tin, doped vanadium oxide, doped tungsten oxide. Sulphide particles comprise for example zinc sulphide. Nitride particles comprise for example silicon nitride.

It can be preferred to use a mixture of two or more nanoparticles. By using different types of nanoparticles the difference in refractive index between the first layer and the second layer can be better matched over a broader wavelength range. A preferred mixture of nanoparticles comprises a combination of titanium oxide and zirconium oxide particles.

The refractive index of the first layer and of the second layer is influenced by the refractive index of the matrix material, the refractive index of the nanoparticles, the volume fraction of the nanoparticles, the volume fraction of the matrix material, the size and shape of the nanoparticles, ...

For the purpose of this invention, the volume fraction of nanoparticles of a layer is defined as the volume of the nanoparticles present in the layer divided by the total volume of the layer. In case voids are present in the layer, these voids are included in the total volume of the layer.

The volume fraction of the matrix material is defined as the volume of the matrix material present in the layer divided by the total volume of the layer.

The matrix material comprises for example a binder such as an inorganic or an organic binder or a resin. As an example of inorganic binders silicate binders can be considered. As organic binder acrylic based binders, vinyl based binders, urethane based binders and the like can be considered.

Possibly, one or more additives are added to the matrix material. Examples of additives comprise surface control agents, foam control agents, rheology modifiers, dispersants, wetting agents, color tone adjustment agents, surface modifiers, cure initiators such as UV cure initiators or electron beam cure initiators, thermal cure initiators, anti-shining agents, corrosion inhibitors, conductivity agents, UV absorbers, light stabilizers, biocides, adhesion promoters, polymerization initiators, solar control additives such as nanoparticles for example indium tin oxide (ITO) nanoparticles or antimony tin oxide (ATO) nanoparticles,

According to the present invention the concentration of nanoparticles of the low iridescent coating is chosen in such a way that the refractive index of the low iridescent coating approximates the refractive index of the substrate.

In case one type of nanoparticles is used, the refractive index of layer n at a certain wavelength A is calculated according to the following equation :

$$\eta_{\text{layer n}}(\lambda) = V_{NP} \cdot \eta_{NP}(\lambda) + V_{\text{matrix}} \cdot \eta_{\text{matrix}}(\lambda)$$

whereby

| | |
|---|---|
| $n_{\text{layer n}}(\lambda)$ | is the refractive index of layer n at wavelength $\lambda$; |
| $V_{NP}$ | is the volume fraction of the nanoparticles in layer n; |
| $\eta NP(\lambda)$ | is the refractive index of the nanoparticles at the wavelength $\lambda$; |
| $V_{\text{matrix}}$ | is the volume fraction of the matrix material in layer n; |
| $\eta_{\text{matrix}}(\lambda)$ | is the refractive index of the matrix material at the wavelength $\lambda$. |

In case a mixture of different types of nanoparticles is used, the refractive index of layer n at a certain wavelength $\lambda$ is calculated according to the following equation :

$$\eta_{\text{layer n}}(\lambda) = V_{NP_1} \cdot \eta_{NP_1}(\lambda) + V_{NP_2} \cdot \eta_{NP_2}(\lambda) + \ldots + V_{NP_n} \cdot \eta_{NP_n}(\lambda) + V_{\text{matrix}} \cdot \eta_{\text{matrix}}(\lambda)$$

whereby

| | |
|---|---|
| $\eta NP1(\lambda)$ | is the refractive index of the first type of nanoparticles at the wavelength $\lambda$; |
| $V_{NP1}$ | is the volume fraction of the first type of nanoparticles in layer n; |
| $\eta NP2(\lambda)$ | is the refractive index of the second type of nanoparticles at the wavelength $\lambda$; |
| $V_{NP2}$ | is the volume fraction of the second type of nanoparticles in layer n; |
| $\eta_{NPn}(\lambda)$ | is the refractive index of the nth type of nanoparticles at the wavelength A. |
| $V_{NPn}$ | is the volume fraction of the nth type of nanoparticles in layer n. |

According to the present invention the nanoparticles are incorporated or embedded in the matrix material. Any method to incorporate or embed the nanoparticles in the matrix material can be used. One possible method comprises extrusion or coextrusion. Alternatively, the layer comprising the matrix material and the nanoparticles can be obtained by applying a mixture comprising the matrix material and the nanoparticles on a substrate. This mixture can be applied by any technique known in the art, preferably by a wet coating technique. Suitable techniques are self-metered coating techniques as spin coating, dip coating, reverse roll coating, reverse roll precision coating, direct roll coating, nip roll coating and forward roll coating; doctored coating techniques as meyer rod coating, blade coating, knife coating, air-knife coating, kiss coating; pre-metered coating techniques as slot die coating, slide coating, extrusion coating, curtain coating, curtain precision coating, spray coating or hybrid coating techniques using a combination of one or more of the above mentioned techniques such as gravure coating, microgravure coating and meniscus coating. Possibly, a solvent is added to the mixture.

In a specific embodiment of the present invention, the nanoparticles comprise organic groups on their surface. These organic group may form a crosslinked network with the matrix material. These organic groups are for example grafted to the nanoparticle surface. Examples may be nanoparticles with acrylate groups and/or methacrylate groups.

The layered structure according to the present invention is of particular importance in case one of the layers of the layered structure has a thickness lower than 5 $\mu$m as for example between 1 and 3.5 $\mu$m. It is known in the art that iridescence is most pronounced in case such thin layers are used.

According to a second aspect of the present invention a window film comprising a layered structure comprising at least a first layer and a second layer as described above is provided.

The window film can for example function as a solar control film or as a safety film.

Preferably, at least one of the first layer and the second layer comprises a substrate. As substrate in principle any substrate can be considered as for example a transparent substrate, a dyed substrate, a reflecting substrate and an absorbing substrate. The substrate can either be flexible or rigid. Preferred substrates comprise glass substrates and polymer films. Suitable polymers comprise polycarbonate resins, acrylic resins, polyester resins, polyethylene terephthalate resins, polyethylene naphthalate resins, polyamide resins, vinyl chloride resins, olefin resins, epoxy resins, polyimide resins, fluoro resins, vinyl based resins, such as polyvinylbutyral resins or ethylene acetic acid vinyl copolymer resins, polyurethane resins and polyetherimide resins.

Preferably, at least one of the first layer and the second layer comprises a coating layer applied on a substrate.

A coating layer according to the present invention has preferably a thickness lower than 5 $\mu$m, as for example between 1 and 3.5 $\mu$m.

In case the layered structure or the window film comprises a coating layer, the refractive index of the coating layer is the refractive index of the coating layer as such.

A first group of window films comprises window films comprising a layered structure having as first layer a substrate and as second layer a coating layer applied on this substrate. The coating layer may for example have the function of a hard coating, an adhesive layer, an infrared absorbing layer, an anti-fog layer, ... The coating layer comprises nanoparticles to match the refractive index of the coating layer to the refractive index of the substrate.

In a particular embodiment of this first group of window films, the window film comprises a substrate and a hard coating. The hard coating comprises for example an acrylate based coating layer. The hard coating comprises nanoparticles. The volume fraction of the nanoparticles in the hard coating is chosen in such a way that the difference between refractive index of the hard coating comprising the nanoparticles and the refractive index of the metallized substrate at each wavelength of the visible range is less than 0.08, more preferably less than 0.06 and most preferably even less than 0.02. As the refractive index of the hard coating is matched to the refractive index of the substrate, this type of window film does not show iridescence.

This type of window film can be adhered to a glass substrate by means of an adhesive layer. As the refractive index of the adhesive layer and the glass substrate are different, iridescence may occur at the interface adhesive - glass substrate. To avoid this, possibly nanoparticles can be added to the adhesive layer to match the difference in refractive index of the adhesive layer and the glass substrate.

A second group of window films comprises a metallized substrate and a coating layer as for example a hard coating. The metallized substrate comprises for example a polymer or a glass substrate provided with a metal layer such as a silver layer. The hard coating comprises nanoparticles. The volume fraction of the nanoparticles in the hard coating is chosen in such a way that the difference between refractive index of the hard coating comprising the nanoparticles and the refractive index of the metallized substrate at each wavelength of the visible range is less than 0.08, more preferably less than 0.06 and most preferably even less than 0.02. As the refractive index of the hard coating is matched to the refractive index of the substrate, this type of window film does not show iridescence.

Also this type of window film can be adhered to a glass substrate by means of an adhesive layer. Possibly nanoparticles can be added to the adhesive layer to match the difference in refractive index of the adhesive layer and the glass substrate.

A third group of window films comprises at least a first substrate and a second substrate. The window films comprises consecutively a first substrate, an adhesive layer, a second substrate and a hard coating. The hard coating comprises nanoparticles to match the refractive index of the hard coating to the refractive index of the second substrate and to avoid iridescence. The volume fraction of the nanoparticles in the hard coating is chosen in such a way that the difference between the refractive index of the hard coating and the refractive index of the second substrate at each wavelength of the visible range is less than 0.08, more preferably less than 0.06 and most preferably even less than 0.02.

Possibly, nanoparticles are also added to the adhesive layer to match the refractive index of the adhesive layer to the refractive index of the first substrate.

Also this type of window film can be adhered to a glass substrate by means of an adhesive layer. Possibly, nanoparticles can be added to the adhesive layer to match the difference in refractive index of the adhesive layer and the glass substrate.

According to a third aspect of the present invention a method to match the difference in refractive index between a first layer and a second layer is provided. The first layer has a refractive index $\eta_1$. The second layer has a refractive index $\eta_2$. The first layer comprises a first matrix having a refractive index $\eta_{matrix1}$ and the second layer comprises a second matrix material having a refractive index $\eta_{matrix2}$. The refractive index $n_{matrix1}$ is different from the refractive index $n_{matrix2}$. The difference between the refractive index $\eta_{matrix1}$ and the refractive index $\eta_{matrix2}$ at a wavelength of 510 nm being at least 0.1.

The method according to the present invention comprises the step of incorporating nanoparticles in at least one of said first and/or said second matrix material. The volume fraction of said nanoparticles in said first and/or said second matrix material is chosen to obtain a difference in refractive index of the first layer $\eta_1$ and of the second layer index $\eta_2$ less than 0.08.

More preferably, the difference in refractive index of the refractive index $\eta_1$ and of the second layer index $\eta_2$ less than 0.06 or even lower than 0.02.

Brief Description of Figures in the Drawings

The invention will now be described into more detail with reference to the accompanying drawings wherein

- Figure 1 is an illustration of a reflection spectrum in the visible range of a substrate having a coating layer whereby the substrate and the coating layer have a different refractive index;
- Figure 2 is an illustration of a reflection spectrum in the visible range of a substrate coated with a low iridescent coating according to the present invention;
- Figure 3 is an illustration of a reflection spectrum in the visible range of glass substrate provided with a window film.

Mode(s) for Carrying Out the Invention

The present invention will be further described with respect to particular embodiments and with reference to certain drawings.

The term first, second and the like in the description and the claims are used for distinguishing between similar elements and not necessarily for describing a sequence, either temporally, spatially, in ranking or in any other manner.

A first example of a coated substrate comprises a PET film coated with a hard coating. The hard coating comprises an acrylate based coating, more particularly a 95 wt% mixture of penta erythritol acrylates multifunctional monomers, 2 wt% additives and 3 wt% of UV cure initiators. The coating has a thickness ranging between 1.5 and 3 $\mu$m. The hard coating has a refractive index at 510 of 1.48. The PET film has a thickness of 23 $\mu$m and a refractive index at 510 nm of 1.65.

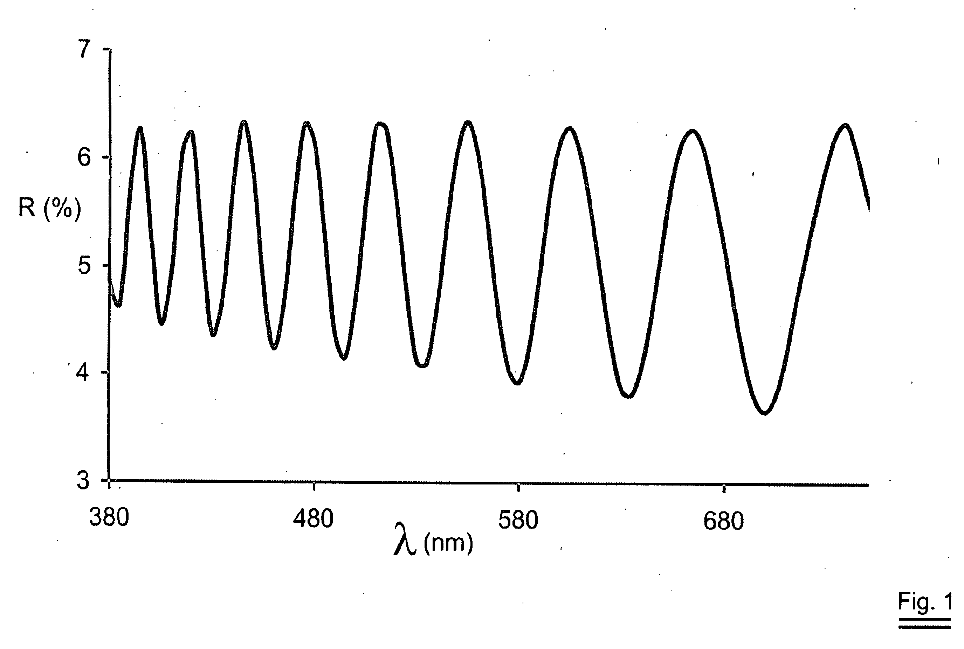

The reflection spectrum of this coated substrate is given in Figure 1. The reflection pattern of Figure 1 shows pronounced fringes in the visible range.

A second example comprises a substrate coated with hard coating layer according to the present invention. The hard coating comprises an acrylate based coating as mentioned in the first example having a thickness ranging between 1.5 and 3 $\mu$m. The substrate comprises a PET film having a thickness of 23 $\mu$m and having a refractive index at 510 nm of 1.65. The hard coating further comprise $ZrO_2$ nanoparticles. The concentration of $ZrO_2$ nanoparticles is chosen in order to match the difference in refractive index between the substrate and the hard coating.

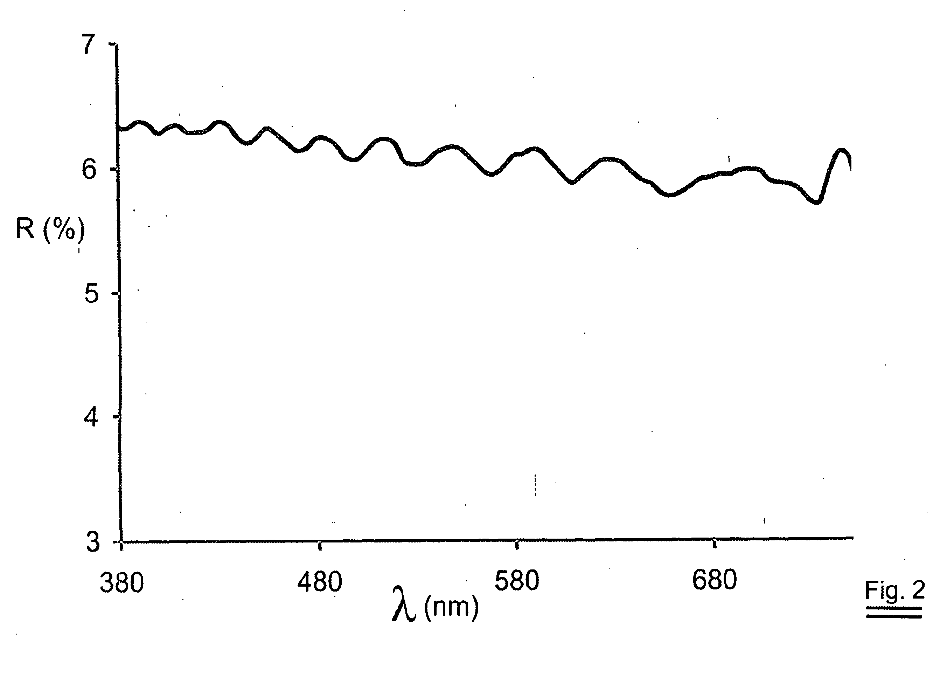

The reflection spectrum of this coated substrate is given in Figure 2. Compared to Figure 2, the fringes in the visible range are less pronounced resulting in a coated substrate showing no iridescence.

A third example comprises a glass substrate provided with a window film. The window film comprises a PET substrate and a hard coating comprising $ZrO_2$ particles. The window film is laminated to the glass substrate by means of an adhesive. The PET substrate has a thickness of 23 $\mu$m and the glass substrate is 3 mm clear glass. The hard coating comprises an acrylate based coating as mentioned in the first example.

Three different embodiments of window films are considered each having a different concentration of $ZrO_2$

particles :

- a first embodiment A comprises a hard coating without added $ZrO_2$ particles;
- a second embodiment B comprises a hard coating having a low volume fraction of $ZrO_2$ particles;
- a third embodiment C comprises a hard coating having a volume fraction of $ZrO_2$ particles to match the difference in refractive index between the PET substrate and the hard coating.

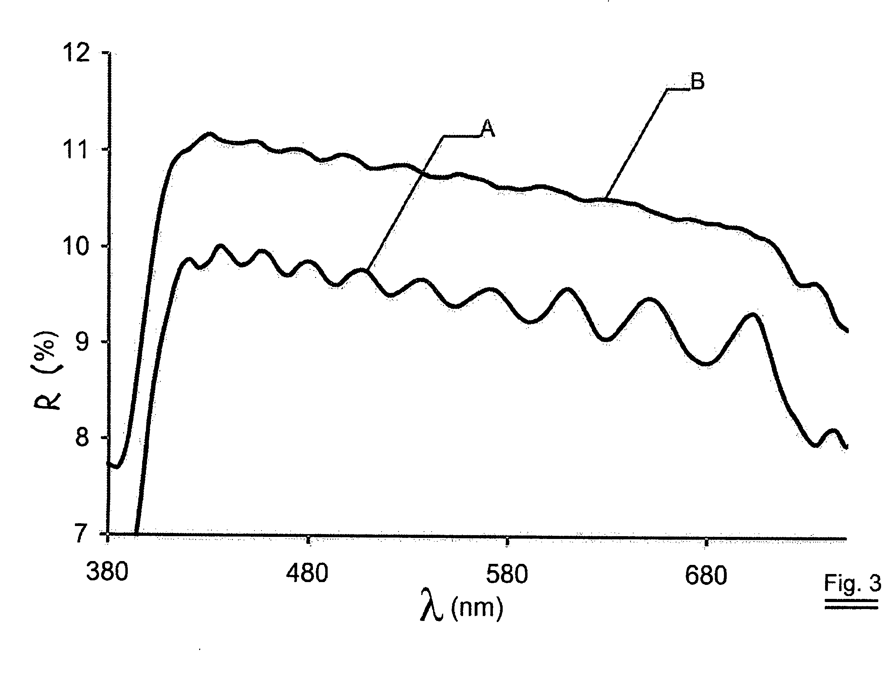

The reflection spectra of the glass provided with different embodiments of window films are given in Figure 3. From Figure 3 it can be concluded that the fringes of the spectra are reduced by increasing the concentration of nanoparticles in the hard coating so that the difference in refractive index between the PET substrate and the hard coating is reduced.

## Claims

1.  A layered structure comprising at least a first layer having a refractive index $\eta_1$ and a second layer having a refractive index $\eta_2$, said first layer comprising a first matrix material having a refractive index $\eta_{matrix}$ and said second layer comprising a second matrix material having a refractive index $\eta_{matrix\ 2}$, the difference between said refractive index of said first matrix material $\eta_{matrix\ 1}$ and said refractive index of said second matrix material $\eta_{matrix\ 2}$ at a wavelength of 510 nm being at least 0.1; **characterised in that** at least one of said first layer or said second layer comprises nanoparticles having a diameter ranging between 1 and 500 nm in a volume fraction to match the difference in refractive index between the first matrix material $\eta_{matrix}$ and the second matrix material $\eta_{matrix\ 2}$ in such a way that the difference between the refractive index of the first layer $\eta_1$ and the refractive index of the second layer $\eta_2$ at each wavelength of the visible range from 380 to 750 nm is less than 0.08.

2.  A layered structure according to claim 1, whereby said first layer and said second layer comprise nanoparticles.

3.  A layered structure according to claim 1 or 2, whereby said nanoparticles comprise organic or inorganic nanoparticles or a combination of organic and inorganic nanoparticles.

4.  A layered structure according to any one of the preceding claims, whereby said nanoparticles are selected from the group consisting of oxides particles, sulphide particles, nitride particles, doped oxide particles, doped sulphide particles, doped nitride particles and combinations thereof.

5.  A layered structure according to claim 4, whereby said nanoparticles are selected from the group consisting of aluminum oxide, silicon oxide, zirconium oxide, titanium oxide, antimony oxide, zinc oxide, tin oxide, indium oxide, indium tin oxide, cerium oxide, niobium oxide, vanadium oxide, tungsten oxide, tantalium oxide, zinc sulphide, silicon nitride, doped variants thereof and mixtures thereof.

6.  A layered structure according to any one of the preceding claims, whereby said nanoparticles comprises organic groups on their surface, said organic groups forming a crosslinked network with said matrix material.

7.  A layered structure according to claim 6, whereby said organic groups comprises acrylate groups and/or methacrylate groups.

8.  A window film comprising a layered structure comprising at least a first layer and a second layer as defined in any one of claims 1 to 7.

9.  A window film according to claim 8, whereby at least one of said first layer and said second layer comprises a glass substrate or a polymer substrate.

10. A window film according to any one of claims 8 or 9, whereby at least one of said first and said second layer comprises a coating layer.

11. A window film according to any one of claims 8 to 10, whereby said first layer comprises a polymer substrate or a glass substrate and whereby said second layer comprises a coating layer applied on said first layer, said second layer comprising nanoparticles.

12. A window film according to any one of claims 8 to 11, whereby said coating layer is functioning as a hard coating, an adhesive, an infrared absorbing layer or an anti-fog layer.

13. A method to match the difference in refractive index between a first layer having a refractive index $n_1$ and a second layer having a refractive index $\eta_2$; said first layer comprising a first matrix material having a refractive index $\eta_{matrix1}$ and said second layer comprising a second matrix material having a refractive index $\eta_{matrix2}$, the difference between said refractive index $\eta_{matrix1}$ and said refractive index $\eta_{matrix2}$ at a wavelength of 510 nm being at least 0.1, said method comprises the step of incorporating nanoparticles having a diameter ranging between 1 and 500 nm in at least one of said first or said second matrix material, whereby said nanoparticles are present in a volume fraction that the difference in refractive index at each wavelength of the visible range from 380 nm to 750 nm is less than 0.08.

14. A method according to claim 13, whereby said first layer and said second layer comprise nanoparticles.

15. A method according to any one of claims 13 or 14, whereby said nanoparticles are selected from the group consisting of oxides particles, sulphide particles, nitride particles, doped oxide particles, doped sulphide particles, doped nitride particles and combinations thereof.

## Patentansprüche

1. Eine Schichtstruktur, die mindestens eine erste Schicht mit einem Brechungsindex $\eta_1$ und eine zweite Schicht mit einem Brechungsindex $\eta_2$ aufweist, wobei die erste Schicht ein erstes Matrixmaterial mit einem Brechungsindex $\eta_{matrix1}$ umfasst und die zweite Schicht ein zweites Matrixmaterial mit einem Brechungsindex $\eta_{matrix2}$ umfasst, wobei die Differenz zwischen dem Brechungsindex $\eta_{matrix1}$ des ersten Matrixmaterials und dem Brechungsindex $\eta_{matrix2}$ des zweiten Matrixmaterials bei einer Wellenlänge von 510 nm mindestens 0,1 beträgt; **dadurch gekennzeichnet, dass** mindestens eine der ersten Schicht oder der zweiten Schicht Nanopartikel mit einem Durchmesser im Bereich zwischen 1 und 500 nm in einem Volumenanteil entsprechend der Differenz beim Brechungsindex $\eta_{matrix1}$ des ersten Matrixmaterials und dem Brechungsindex $\eta_{matrix2}$ des zweiten Matrixmaterials derart aufweist, dass die Differenz zwischen Brechungsindex $\eta_1$ der ersten Schicht und dem Brechungsindex $\eta_2$ der zweiten Schicht bei einer Wellenlänge im sichtbaren Bereich von 380 bis 750 nm unter 0,08 liegt.

2. Schichtstruktur nach Anspruch 1, wobei die erste Schicht und die zweite Schicht Nanopartikel umfassen.

3. Schichtstruktur nach Anspruch 1 oder 2, wobei die Nanopartikel organische oder anorganische Nanopartikel oder eine Kombination aus organischen und anorganischen Nanopartikeln umfassen.

4. Schichtstruktur nach einem der vorhergehenden Ansprüche, wobei die Nanopartikel ausgewählt sind aus der Gruppe bestehend aus Oxidpartikeln, Sulfidpartikeln, Nitridpartikeln, dotierten Oxidpartikeln, dotierten Sulfidpartikeln, dotierten Nitridpartikeln und Kombinationen davon.

5. Schichtstruktur nach Anspruch 4, wobei die Nanopartikel ausgewählt sind aus der Gruppe bestehend aus Aluminiumoxid, Siliziumoxid, Zirconiumoxid, Titanoxid, Antimonoxid, Zinkoxid, Zinnoxid, Indiumoxid, Indium-Zinnoxid, Ceroxid, Nioboxid, Vanadiumoxid, Wolframoxid, Tantaloxid, Zinksulfid, Siliziumnitrid, dotierten Varianten davon und Mischungen davon.

6. Schichtstruktur nach einem der vorhergehenden Ansprüche, wobei die Nanopartikel organische Gruppen auf ihrer Oberfläche umfassen, wobei die organischen Gruppen ein vernetztes Netzwerk mit dem Matrixmaterial bilden.

7. Schichtstruktur nach Anspruch 6, wobei die organischen Gruppen Acrylatgruppen und/oder Methacrylatgruppen umfassen.

8. Fensterfilm, der eine Schichtstruktur umfasst, umfassend mindestens eine erste Schicht und eine zweite Schicht wie in einem der Ansprüche 1 bis 7 definiert.

9. Fensterfilm nach Anspruch 8, wobei mindestens eine der ersten Schicht und der zweiten Schicht ein Glassubstrat oder ein Polymersubstrat umfasst.

10. Fensterfilm nach einem der Ansprüche 8 oder 9, wobei mindestens eine der ersten und zweiten Schicht eine Beschichtungsschicht umfasst.

**11.** Fensterfilm nach einem der Ansprüche 8 bis 10, wobei die erste Schicht ein Polymersubstrat oder ein Glassubstrat umfasst und wobei die zweite Schicht eine auf die erste Schicht aufgebrachte Beschichtungsschicht umfasst, wobei die zweite Schicht Nanopartikel umfasst.

**12.** Fensterfilm nach einem der Ansprüche 8 oder 11, wobei die Beschichtungsschicht als eine harte Beschichtung, als ein Kleber, eine infrarotabsorbierende Schicht oder eine beschlaghemmende Schicht fungiert.

**13.** Verfahren zum Anpassen der Differenz beim Brechungsindex zwischen einer ersten Schicht mit einem Brechungsindex $\eta_1$ und einer zweiten Schicht mit einem Brechungsindex $\eta_2$; wobei die erste Schicht ein erstes Matrixmaterial mit einem Brechungsindex $\eta_{matrix1}$ umfasst und die zweite Schicht ein zweites Matrixmaterial mit einem Brechungsindex $\eta_{matrix2}$ umfasst, wobei die Differenz zwischen dem Brechungsindex $\eta_{matrixl1}$ und dem Brechungsindex $\eta_{matrix2}$ bei einer Wellenlänge von 510 nm mindestens 0,1 beträgt, wobei das Verfahren den Schritt des Integrierens von Nanopartikeln mit einem Durchmesser im Bereich zwischen 1 und 500 Nanometer in mindestens eines des ersten oder zweiten Matrixmaterials umfasst, wobei die Nanopartikel in einem Volumenanteil vorliegen, dass die Differenz beim Brechungsindex bei jeder Wellenlänge des sichtbaren Bereichs von 380 nm bis 750 nm unter 0,08 liegt.

**14.** Verfahren nach Anspruch 13, wobei die erste Schicht und die zweite Schicht Nanopartikel umfassen.

**15.** Verfahren nach einem der Ansprüche 13 oder 14, wobei die Nanopartikel ausgewählt sind aus der Gruppe bestehend aus Oxidpartikeln, Sulfidpartikeln, Nitridpartikeln, dotierten Oxidpartikeln, dotierten Sulfidpartikeln, dotierten Nitridpartikeln und Kombinationen davon.

## Revendications

**1.** Structure stratifiée comprenant au moins une première couche ayant un indice de réfraction $\eta_1$ et une deuxième couche ayant un indice de réfraction $\eta_2$, ladite première couche comprenant un premier matériau de matrice ayant un indice de réfraction $\eta_{matrice\ 1}$ et ladite deuxième couche comprenant un deuxième matériau de matrice ayant un indice de réfraction $\eta_{matrice\ 2}$, la différence entre ledit indice de réfraction $\eta_{matrice\ 1}$ dudit premier matériau de matrice et ledit indice de réfraction $\eta_{matrice\ 2}$ dudit deuxième matériau de matrice à une longueur d'onde de 510 nm étant d'au moins 0,1, **caractérisée en ce que** ladite première couche et/ou ladite deuxième couche comprennent des nanoparticules ayant un diamètre variant entre 1 et 500 nm dans une fraction volumique pour s'adapter à la différence d'indice de réfraction entre le premier matériau de matrice $\eta_{matrice\ 1}$ et le deuxième matériau de matrice $\eta_{matrice\ 2}$ de telle sorte que la différence entre l'indice de réfraction de la première couche $\eta_1$ et l'indice de réfraction de la deuxième couche $\eta_2$ à chaque longueur d'onde de la gamme visible de 380 à 750 nm est inférieure à 0,08.

**2.** Structure stratifiée selon la revendication 1, dans laquelle ladite première couche et ladite deuxième couche comprennent des nanoparticules.

**3.** Structure stratifiée selon la revendication 1 ou 2, dans laquelle lesdites nanoparticules comprennent des nanoparticules organiques ou inorganiques ou une combinaison de nanoparticules organiques et inorganiques.

**4.** Structure stratifiée selon l'une quelconque des revendications précédentes, dans laquelle lesdites nanoparticules sont choisies dans le groupe constitué par les particules d'oxyde, les particules de sulfure, les particules de nitrure, les particules d'oxyde dopé, les particules de sulfure dopé, les particules de nitrure dopé et les combinaisons de celles-ci.

**5.** Structure stratifiée selon la revendication 4, dans laquelle lesdites nanoparticules sont choisies dans le groupe constitué par l'oxyde d'aluminium, l'oxyde de silicium, l'oxyde de zirconium, l'oxyde de titane, l'oxyde d'antimoine, l'oxyde de zinc, l'oxyde d'étain, l'oxyde d'indium, l'oxyde d'indium et d'étain, l'oxyde de cérium, l'oxyde de niobium, l'oxyde de vanadium, l'oxyde de tungstène, l'oxyde de tantale, le sulfure de zinc, le nitrure de silicium, les variantes dopées de ceux-ci et leurs mélanges.

**6.** Structure stratifiée selon l'une quelconque des revendications précédentes, dans laquelle lesdites nanoparticules comprennent des groupes organiques sur leur surface, lesdits groupes organiques formant un réseau réticulé avec ledit matériau de matrice.

**7.** Structure stratifiée selon la revendication 6, dans laquelle lesdits groupes organiques comprennent des groupes acrylate et/ou des groupes méthacrylate.

**8.** Film de fenêtre comprenant une structure stratifiée comprenant au moins une première couche et une deuxième couche telle que définie dans l'une quelconque des revendications 1 à 7.

**9.** Film de fenêtre selon la revendication 8, dans lequel ladite première couche et/ou ladite deuxième couche comprennent un substrat en verre ou un substrat polymère.

**10.** Film de fenêtre selon l'une quelconque des revendications 8 et 9, dans lequel ladite première et/ou ladite deuxième couche comprennent une couche de revêtement.

**11.** Film de fenêtre selon l'une quelconque des revendications 8 à 10, dans lequel ladite première couche comprend un substrat polymère ou un substrat en verre et dans lequel ladite deuxième couche comprend une couche de revêtement appliquée sur ladite première couche, ladite deuxième couche comprenant des nanoparticules.

**12.** Film de fenêtre selon l'une quelconque des revendications 8 à 11, dans lequel ladite couche de revêtement fonctionne comme une couche dure, un adhésif, une couche absorbant les infrarouges ou une couche antibuée.

**13.** Procédé pour adapter la différence d'indice de réfraction entre une première couche ayant un indice de réfraction $\eta_1$ et une deuxième couche ayant un indice de réfraction $\eta_2$, ladite première couche comprenant un premier matériau de matrice ayant un indice de réfraction $\eta_{matrice\ 1}$ et ladite deuxième couche comprenant un deuxième matériau de matrice ayant un indice de réfraction $_2$, la différence entre ledit indice de réfraction $\eta_{matrice\ 1}$ et ledit indice de réfraction $\eta_{matrice\ 2}$ à une longueur d'onde de 510 nm étant d'au moins 0,1, ledit procédé comprenant l'étape consistant à incorporer des nanoparticules ayant un diamètre variant entre 1 et 500 nm dans ledit premier et/ou ledit deuxième matériau de matrice, lesdites nanoparticules étant présentes dans une fraction volumique de telle sorte que la différence d'indice de réfraction à chaque longueur d'onde de la gamme visible de 380 à 750 nm est inférieure à 0,08.

**14.** Procédé selon la revendication 13, dans lequel ladite première couche et ladite deuxième couche comprennent des nanoparticules.

**15.** Procédé selon l'une quelconque des revendications 13 et 14, dans lequel lesdites nanoparticules sont choisies dans le groupe constitué par les particules d'oxyde, les particules de sulfure, les particules de nitrure, les particules d'oxyde dopé, les particules de sulfure dopé, les particules de nitrure dopé et les combinaisons de celles-ci.

EP 2 125 941 B1

Fig. 1

Fig. 2

Fig. 3